# EUROPÄISCHE PATENTSCHRIFT

(11) **EP 0 632 713 B1**
(45) Veröffentlichungstag und Bekanntmachung des Hinweises auf die Patenterteilung: **29.05.1996**
(21) Anmeldenummer: 94905699.8
(22) Anmeldetag: 25.01.1994
(51) Int. Cl.: A61K 6/04

(54) **BEFESTIGUNGSTEIL FÜR ZAHNMEDIZINISCHE ZWECKE, INSBESONDERE BRACKET**
DENTAL FIXING ELEMENT, IN PARTICULAR BRACKET
PIECE DE FIXATION A USAGE DENTAIRE, NOTAMMENT ATTACHEMENT ORTHODONTIQUE

(30) Priorität: 26.01.1993 DE 4301989
(43) Veröffentlichungstag der Anmeldung: 11.01.1995
(73) Patentinhaber: BÖNHOFF, Markus, D-33449 Langenberg (DE)
(72) Erfinder: BÖNHOFF, Markus, D-33449 Langenberg (DE)
(74) Vertreter: Thielking, Bodo, Dipl.-Ing.
(86) Internationale Anmeldenummer: EP9400191
(87) Internationale Veröffentlichungsnummer: WO9416667

(56) Entgegenhaltungen:
- DE-A- 3 838 829
- FR-A- 1 453 159
- GB-A- 444 754
- DATABASE WPI Section Ch, Week 8935, Derwent Publications Ltd., London, GB; Class D21, AN 89-254693 & SU,A,1 461 441 (CHEM INST NIKITINA) 28. Februar 1989
- DATABASE WPI Section Ch, Derwent Publications Ltd., London, GB; Class A34, AN 71-16445S & SU,A,270 238 (MAZUROVSKII B YA, ROZENBO)

## Beschreibung

### TECHNISCHES GEBIET

Die Erfindung betrifft ein Bracket aus Metall.

### STAND DER TECHNIK

Brackets, die zur Fixierung von Zahnspangen an den zu regulierenden Zähnen befestigt werden, sind aus unterschiedlichen Materialien bekannt. Weitverbreitet sind derartige Brackets aus Kunststoff. Zwar haben aus Kunststoff bestehende Brackets den Vorteil, daß ihre Farbe sehr ähnlich zur Zahnfarbe zu wählen ist, ihre mechanische Festigkeit ist jedoch unzureichend.

Es sind auch bereits Brackets aus Metall bekannt, beispielsweise aus Edelstahl. Die aus Edelstahl bestehenden Metallbrackets haben den Nachteil, daß sie, unter anderem wegen ihres Nickelgehalts, allergen sein können. Außerdem ist die Erzeugung einer ausreichend festen Klebeverbindung zwischen einem Edelstahl-Bracket und der Zahnoberfläche problematisch. Dieses Problem wird durch spezielle rasterartige oder siebartige Oberflächenausbildungen an der Basis des Brackets nur gemildert aber nicht einwandfrei gelöst.

Physiologisch unbedenklich sind mit Titan beschichtete oder vollständig aus Titan bestehende Brackets. Diese sind nicht nur teuer, ihr optisches Erscheinungsbild ist auch sehr störend.

Für eine optimale ästhetische Anpassung ist es auch bekannt, Metallgrundkörper mit einer Aufbrennkeramik zu versehen, wie dies beispielsweise bei Zahnkronen üblich ist. Abgesehen davon, daß ein solches Verfahren sehr aufwendig ist, hat es den ergänzenden Nachteil, daß die aufgebrannte Keramik bei den auftretenden Belastungen sehr leicht abplatzen kann.

Es ist ferner bekannt (DATABASE WPI, Section Ch, Week 8935, Derwent Publications Ltd., London, GB, AN 89-254693 & SU-A-1461441), Zahnklammern aus hochreinem Aluminium und Legierungsbestandteilen herzustellen. Solche Zahnklammern sind sehr empfindlich gegen Verschleiß, unter anderem durch Zahnputzmittel.

Weiterhin ist es bekannt (FR-A-1453159), eine Basisplatte für eine Zahnprothese aus Aluminium herzustellen, welche auch anodisiert sein kann. Derartige Basisplatten sind dem Verschleiß nicht so intensiv ausgesetzt, wie Brackets.

Schließlich ist es auch bekannt, Formen für den Kunststoffspritzguß aus Aluminium herzustellen und die Kavität mit einem Hartanodisationsverfahren zu behandeln.

### DIE ERFINDUNG

Ausgehend von diesem Stand der Technik liegt der Erfindung die Aufgabe zugrunde, ein Bracket aus Metall zu schaffen, das preisgünstig herstellbar, physiologisch unbedenklich und ästhetisch ansprechend ist, wobei es gute mechanische Eigenschaften aufweisen soll.

Die Lösung dieser Aufgabe erfolgt dadurch, daß das Metall eine Aluminiumlegierung ist, die eine hart-anodisierte Oberfäche aufweist. Bevorzugte Aluminiumlegierungen sind in den Unteransprüchen 2 bis 8 erwähnt.

Es hat sich als besonders zweckmäßig erwiesen, daß die Oberfläche mittels des Ematal-Verfahrens hart-anodisiert ist.

Die Verwendung einer Aluminiumlegierung mit einer hartanodisierten Oberfläche erweist sich in mehrfacher Hinsicht als besonders günstig:

Im Gegensatz zu allergenen nickelhaltigen Edelstahl-Brackets sind solche aus einer Aluminiumlegierung mit hart-anodisierter Oberfläche physiologisch völlig unbedenklich. Durch die Hart-Anodisierung ergibt sich eine Oberflächenschicht, die helle, emailartige und pastellfarbige Tönungen aufweisen kann. Durch die Hart-Anodisation sind also Farbgestaltungen erzielbar, die sonst nur mit aufwendigen zusätzlichen Beschichtungsverfahren erreicht werden können. Durch die Hart-Anodisierung erhalten die Brackets nicht nur ein ästhetisch befriedigendes Erscheinungsbild, sondern dies wird erreicht, ohne daß irgendwelche Abplatzungen der Oberflächenschicht zu befürchten waren.

Ein weiterer Vorteil liegt darin, daß Befestigungsteile aus Aluminium besonders preisgünstig herstellbar sind, beispielsweise im Strangpreßverfahren oder im Gußverfahren.

Ein weiterer Nachteil, der häufig bei Chrom-Nickel-Stahl beobachtet wird, entfällt bei den erfindungsgemäßen Befestigungsteilen ebenfalls. Bei Edelstahl-Brackets treten häufig Korrosionen im Grenzbereich zwischen Klebstoff und Bracketbasis auf. Diese Korrosionserscheinungen führen zu Verfärbungen des Klebers und des Zahnschmelzes. Die Ursache ist Spaltkorrosion.

Demgegenüber sind Korrosionserscheinungen bei hart-anodisierten Aluminiumlegierungen weitgehend ausgeschlossen. Selbst eventuell auftretende Verletzungen der anodisierten Oberflächenschicht erweisen sich bei einer geeigneten Auswahl der Aluminiumlegierung als unproblematisch. Es können bevorzugt solche Aluminiumlegierungen verwendet werden, die bereits von sich aus korrosionsresistent gegen stark elektrolyt- bzw. salzhaltige Medien sind.

Ein weiterer wesentlicher Vorteil der erfindungsgemäßen Befestigungsteile besteht darin, daß mit ihnen eine besonders gute Haftfähigkeit zwischen Kleber und Befestigungsbasis erzielbar ist, ohne daß bei solchen Befestigungsteilen komplizierte Veränderungen der dem Kleber zugewandten Oberflächenschicht vorzunehmen sind. Es entfallen beispielsweise Fräsungen oder das häufig vorgenommene Aufsintern von Mikrodrahtnetzgeflechten. Ebenso ist eine Plasmabeschichtung mit Titan oder eine Glasbeschichtung überflüssig. Vielmehr genügen einfache bekannte Methoden zur Schaffung guter Haftgründe. Dies kann beispielsweise durch Korundstrahlen oder Anätzen mit Säuren oder Laugen sowie anschließendes Hart-Anodisieren erfolgen.

Die erfindungsgemäßen Befestigungsteile weisen zahlreiche Vorteile auf, die bei Verwendung anderer Metalle für die Gestaltung der Befestigungsteile nur mit einem wesentlich höheren Aufwand und zudem nicht einmal gleichem optischem Ergebnis erzielbar wären.

### BESTER WEG ZUR AUSFÜHRUNG DER ERFINDUNG

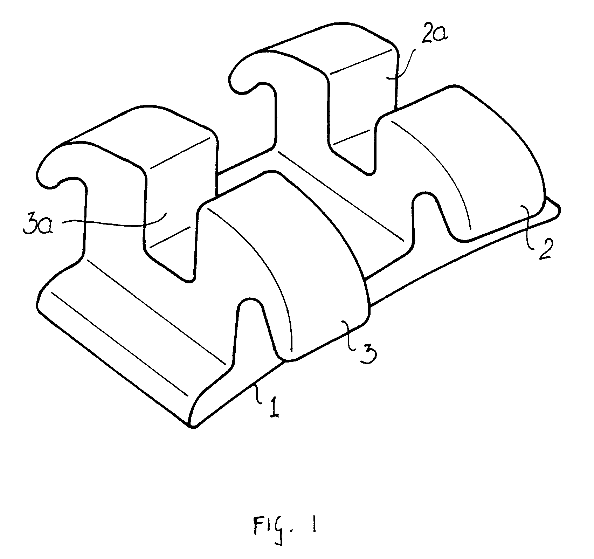

In der Zeichnung ist ein typisches Bracket dargestellt, dessen Herstellung aus einer Aluminiumlegierung mit hartanodisierter Oberfläche in großen Serien möglich ist. Auf einer entsprechend der Zahnoberfläche gekrümmten Basis 1 sind mit Abstand voneinander zwei Querstege 2 und 3 angeordnet, die jeweils in der Mitte Aufnahmeschlitze 2a und 3a für die nicht dargestellte Zahnklammer besitzen. Die beiden Querstege 2 und 3 sind mit Abstand zueinander angeordnet.

## Patentansprüche

1. Bracket aus Metall,
dadurch gekennzeichnet,
daß das Metall eine Aluminiumlegierung ist, die eine hart-anodisierte Oberfläche aufweist.

2. Bracket nach Anspruch 1,
dadurch gekennzeichnet,
daß die Aluminiumlegierung Al Mg Si O 5 ist.

3. Bracket nach Anspruch 1,
dadurch gekennzeichnet,
daß die Aluminiumlegierung Al Mg 3 ist.

4. Bracket nach Anspruch 1,
dadurch gekennzeichnet,
daß die Aluminiumlegierung Al Mg 5 ist.

5. Bracket nach Anspruch 1,
dadurch gekennzeichnet,
daß die Aluminiumlegierung Al Mg 1 ist.

6. Bracket nach Anspruch 1,
dadurch gekennzeichnet,
daß die Aluminiumlegierung Al Mg 2 Mn O 3 ist.

7. Bracket nach Anspruch 1,
dadurch gekennzeichnet,
daß die Aluminiumlegierung Al Mg 2 Mn O 8 ist.

8. Bracket nach Anspruch 1,
dadurch gekennzeichnet,
daß die Aluminiumlegierung Al Mg Si 1 ist.

9. Bracket nach einem oder mehreren der Ansprüche 1 bis 8,
dadurch gekennzeichnet,
daß die Oberfläche mittels des Ematal-Verfahrens hartanodisiert ist.

## Claims

1. Bracket of metal,
characterised in that the metal is an aluminium alloy which has a hard anodised surface.

2. Bracket according to claim 1,
characterised in that the aluminium alloy is Al Mg Si O 5.

3. Bracket according to claim 1,
characterised in that the aluminium alloy is Al Mg 3.

4. Bracket according to claim 1,
characterised in that the aluminium alloy is Al Mg 5.

5. Bracket according to claim 1,
characterised in that the aluminium alloy is Al Mg 1.

6. Bracket according to claim 1,
characterised in that the aluminium alloy is Al Mg 2 Mn O 3.

7. Bracket according to claim 1,
characterised in that the aluminium alloy is Al Mg 2 Mn O 8.

8. Bracket according to claim 1,
characterised in that the aluminium alloy is Al Mg Si 1.

9. Bracket according to one or more of the claims 1-8,
characterised in that the surface is hard anodised by means of the Ematal process.

## Revendications

1. Attache orthodontique en métal,
caractérisée en ce que
le métal est un alliage d'aluminium présentant une surface anodisée dur.

2. Attache orthodontique selon la revendication 1,
caractérisée en ce que
l'alliage d'aluminium est un alliage Al Mg Si O 5.

3. Attache orthodontique selon la revendication 1,
caractérisée en ce que
l'alliage d'aluminium est un alliage Al Mg 3.

4. Attache orthodontique selon la revendication 1,
caractérisée en ce que
l'alliage d'aluminium est un alliage Al Mg 5.

5. Attache orthodontique selon la revendication 1,
caractérisée en ce que
l'alliage d'aluminium est un alliage Al Mg 1.

6. Attache orthodontique selon la revendication 1,
caractérisée en ce que
l'alliage d'aluminium est un alliage Al Mg Mn O 3.

7. Attache orthodontique selon la revendication 1,
caractérisée en ce que
l'alliage d'aluminium est un alliage Al Mg 2 Mn O 8.

8. Attache orthodontique selon la revendication 1,
caractérisée en ce que
l'alliage d'aluminium est un alliage Al Mg Si 1.

9. Attache selon l'une des revendications 1 à 8,
caractérisée en ce que
la surface est anodisée dur selon le procédé Ematal.
